(19) Europäisches Patentamt
European Patent Office
Office européen des brevets

(11) Veröffentlichungsnummer: **0 407 801 B1**

# (12) EUROPÄISCHE PATENTSCHRIFT

(45) Veröffentlichungstag der Patentschrift: **07.09.94**

(51) Int. Cl.5: **C07F 9/08**

(21) Anmeldenummer: **90112083.2**

(22) Anmeldetag: **26.06.90**

## (54) Verfahren zur Herstellung von Phosphorarylestern mit alpha-Methylbenzylphenoxyresten.

(30) Priorität: **08.07.89 DE 3922519**

(43) Veröffentlichungstag der Anmeldung:
**16.01.91 Patentblatt 91/03**

(45) Bekanntmachung des Hinweises auf die Patenterteilung:
**07.09.94 Patentblatt 94/36**

(84) Benannte Vertragsstaaten:
**CH DE ES FR GB IT LI NL**

(56) Entgegenhaltungen:
**US-A- 3 428 714**
**US-A- 3 677 948**
**US-A- 3 697 628**

(73) Patentinhaber: **BAYER AG**
**D-51368 Leverkusen (DE)**

(72) Erfinder: **Arndt, Uwe, Dr.**
**Malteserstrasse 85**
**D-5000 Köln 40 (DE)**
Erfinder: **Block, Hans-Dieter, Dr.**
**Biesenbach 49**
**D-5090 Leverkusen 3 (DE)**
Erfinder: **Fuhr, Karl, Dr.**
**Krüllsdyk 55**
**D-4150 Krefeld (DE)**
Erfinder: **Müller, Friedemann, Dr.**
**Am Steinacker 5**
**D-4040 Neuss (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 407 801 B1

## Beschreibung

Die vorliegende Erfindung betrifft ein Verfahren zur Herstellung von Phosphorarylestern mit α-Methylbenzylphenoxyresten in Gegenwart eines Phosphorchlorids als Katalysator.

Triarylphosphate mit unsubstituierten Benzylphenoxyresten und an der Benzylgruppe alkylsubstituierten Benzylphenoxyresten sind für verschiedene Einsatzbereiche, wie z.B. die Verwendung als Hydraulikflüssigkeiten, Weichmacher und Flammschutzmittel, mehrfach vorgeschlagen worden und dafür aufgrund ihrer Schwerflüchtigkeit und ihres Temperatur-Viskositäts-Verhaltens sehr gut geeignet (vgl. z.B. DE-OS 2 108 399, US-PS 3 428 714, US-PS 3 677 948, GB-PS 1 228 441).

Die Synthese derartiger Phosphorarylester erfolgt aus Phosphoroxychlorid und dem substituierten oder unsubstituierten (Mono-, Di-, Tri-)benzylphenol unter den für die Synthese von Triarylphosphaten üblichen Bedingungen wie Zusatz von Katalysatoren wie Magnesium oder Magnesiumchlorid oder Aluminiumchlorid unter Erhitzen auf Endtemperaturen bis 300 °C im Verlauf mehrerer Stunden. Die mit diesem Vorgehen verbundenen Schwierigkeiten, insbesondere die Schwierigkeiten in der Herstellung der benzylsubstituierten Phenole, haben bereits zu dem in der US-Patentschrift 3 697 628 gemachten Vorschlag geführt, die Benzylierung, d.h. die Einführung der Benzylgruppen in die Phenoxyreste, zeitlich nach der Triarylphosphat-Synthese mittels Benzylhalogeniden durchzuführen. Jedoch ist auch diese Vorgehensweise mit vielerlei Nachteilen verbunden; es sind Katalysatoren wie Zinkchlorid, Aluminiumchlorid, Titantetrachlorid erforderlich, also Halogenide jener Metalle, die bekanntermaßen viel schwerer aus dem fertigen Produkt Triarylphosphat zu entfernen sind als das für die Triarylphosphat-Synthese vorzugsweise eingesetzte Magnesium. Bezogen auf 1 Mol fertiges Produkt benzylierten Triarylphosphat werden insgesamt 4 Mol Halogenwasserstoff freigesetzt, drei davon in der Synthese des noch nicht benzylierten Triarylphosphats, ein weiteres in der Benzylierungsreaktion. Die Benzylierungsreaktion findet bei Temperaturen oberhalb des Siedepunktes der eingesetzten Benzylhalogenide statt, so daß hohe Verluste an Benzylhalogenid die Folge sind. Die Herstellung ist nach wie vor eine in zwei deutlich getrennten Schritten erfolgende Synthese, worin die in früheren Verfahren als erster Schritt stattfindende Benzylierung des gegebenenfalls alkylsubstituierten Phenols nunmehr als zweiter Schritt nach der Umsetzung von Phosphoroxychlorid mit gegebenenfalls substituiertem Phenol vorgenommen wird.

Es bestand also die Aufgabe, ein einfaches, die vorgenannten Nachteile vermeidendes Verfahren zur Herstellung von α-Methylbenzylphenylestern Phosphor enthaltender Säuren, das sind insbesondere Phosphorsäure und phosphorige Säure, Phosphonsäuren, Phosphonige Säuren, Phosphinsäuren und Phosphinige Säuren sowie die Thioderivate der Säuren mit fünfwertigem Phosphor, bereitzustellen.

Diese Aufgabe wird erfindungsgemäß durch ein Verfahren zur Herstellung von Phosphorsäure-, Phosphorigsäure- und Phosphonsäurearylestern mit an Phosphor gebundenen α-Methylbenzylphenoxyresten der allgemeinen Formel

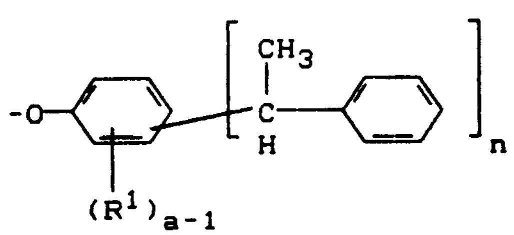

worin a und n unabhängig voneinander eine ganze Zahl von 1 bis 3, $R^1$ eine Alkylgruppe mit 1 bis 4 Kohlenstoff-Atomen bedeutet, gelöst, welches dadurch gekennzeichnet ist, daß die Umsetzung von gegebenenfalls mit $C_1$- bis $C_4$-Alkylgruppen substituierten Phenolen oder eines Phenols mit Styrol durch Zusatz eines für die weitere Umsetzung vorgesehenen Phosphorchlorides als Katalysator erfolgt, und die weitere Umsetzung mit einem Phosphorchlorid sowie gegebenenfalls in Gegenwart von Phosphorpentachlorid in Gegenwart von an sich bekannten Veresterungskatalysatoren, gegebenenfalls unter Zugabe eines die Veresterungsreaktion fördernden Katalysators, gegebenenfalls unter Zugabe eines weiteren Phenols, bei Temperaturen von 20 bis 350 °C erfolgt.

Die vorliegende Erfindung schafft somit ein Verfahren zur Herstellung von Estern Phosphor enthaltender Säuren, wobei diese Ester die allgemeine Formel

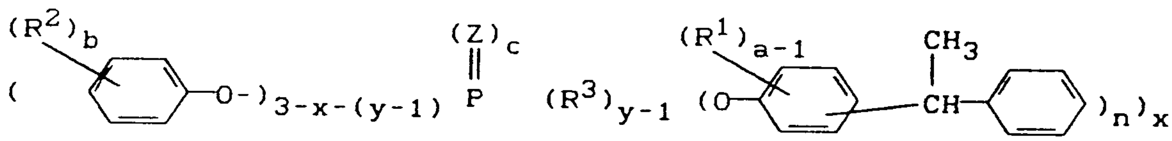

aufweisen, worin a, n, x und y unabhängig voneinander eine ganze Zahl von 1 bis 3, b die Zahlen 0, 1, 2, 3, c die Zahlen 0 oder 1, $R^1$ und $R^2$ unabhängig voneinander eine Alkylgruppe mit 1 bis 4 Kohlenstoffatomen, Z die Elementsymbole 0 oder 3, $R^3$ einen substituierten oder unsubstituierten Aryloxyrest mit 6 bis 12 Kohlenstoffatomen, einen gegebenenfalls mit Fluor, Chlor oder Brom oder einer Arylgruppe substituierten Alkylrest mit 1 bis 8 Kohlenstoffatomen, einen Arylrest mit 6 bis 12 Kohlenstoffatomen, einen gegegebenenfalls mit Arylgruppe substituierten Alkenylrest mit 1 bis 4 Kohlenstoffatomen oder ein Chlor-Atom bedeuten, mit der Maßgabe, daß $x + y$ maximal = 4 sind.

Für das Verfahren der Erfindung geeignete Phenole sind z.B. Phenol, die isomeren Kresole, die isomeren Xylenole, die isomeren Mono-, und Diethylphenole, die isomeren Mono- und Diisopropylphenole, die isomeren Mono- und Di-tert.-butylphenole, i-Oktylphenol, Nonylphenol, Phenylphenol, Isopropylphenylphenole, Dodecylphenol, Methylenphenylphenol, Isopropylidenphenylphenol, Cyclohexylphenol als Einzelsubstanzen, als Gemisch sowie gegebenenfalls im Gemisch mit weiteren, z.B. dreifach substituierten Phenolen.

Von den dafür geeigneten Phosphorchloriden seien beispielhaft genannt: Phosphoroxychlorid, Phosphortrichlorid, Phenyldichlorphosphat, Diphenylchlorphosphat, Kresylphenylchlorphosphat, Phenyldichlorphosphit, Methanphosphonsäuredichlorid, Ethanphosphonsäuredichlorid, Vinylphosphonsäuredichlorid, Chlormethanphosphonsäuredichlorid, Benzolphosphonsäuredichlorid, Methyldichlorphosphan, Ethyldichlorphosphan, Phenyldichlorphosphan, Methylethylchlorphosphan, Diphenylchlorphosphan, 1-Chlor-1-oxophospholin, Methanphosphonsäurephenylesterchlorid, Benzolphosphonsäurekresylesterchlorid.

Besonders bevorzugt ist ein Verfahren zur Herstellung von Phosphorsäurearylestern und Phosphorigsäurearylestern mit an den Phosphor gebundenen α-Methylbenzylphenoxyresten, welches dadurch gekennzeichnet ist, daß als Phosphorchlorid Phosphoroxychlorid oder Phosphortrichlorid eingesetzt wird und Verbindungen der allgemeinen Formel

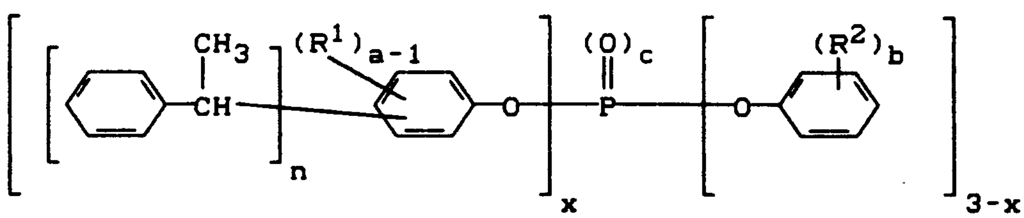

worin a, n und x unabhängig vineinander jeweils eine ganze Zahl von 1 bis 3, b eine ganze Zahl von 0 bis 3, c 0 oder 1 ist, $R^1$ und $R^2$ unabhängig voneinander eine Alkylgruppe mit 1 bis 4 C-Atomen bedeutet, hergestellt werden.

Beispiele für die nach dieser bevorzugten Variante des erfindungsgemäßen Verfahrens herzustellenden Ester sind beispielsweise Diphenyl-α-methylbenzylphenylphosphat, Phenyl-bis-(α-methylbenzylphenylphosphat), Phenylkresyl-α-methylbenzylphenylphosphat, Diphenyl-4-(α-methylbenzyl)-2-methylphenylphosphat.

Weiterhin bevorzugt ist ein Verfahren zur Herstellung von Phosphonsäurearylestern und Phosphonigsäurearylestern mit an den Phoshor gebundenen α-Methylbenzylphenoxyresten, welches dadurch gekennzeichnet ist, daß als Phosphorchlorid ein organisches Phosphorchlorid der Formel

$$R^3-\overset{(O)_c}{\overset{\|}{P}}Cl_2,$$

worin $R^3$ erin aliphatischer oder aromatischer Rest und c 0 oder 1 ist, eingesetzt wird, und Verbindungen der allgemeinen Formel

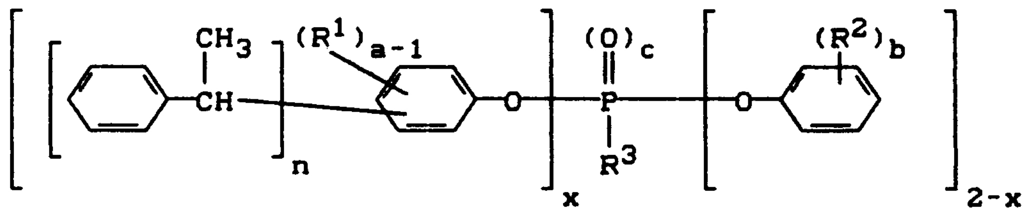

worin a, b und n unabhängig voneinander jeweils eine ganze Zahl von 1 bis 3, b eine ganze Zahl von 0 bis 3, x 1 oder 2 und c 0 oder 1 ist, $R^1$ und $R^2$ eine Alkylgruppe mit 1 bis 4 C-Atomen und $R^3$ einen aliphatischen oder aromatischen Rest bedeutet, hergestellt werden.

Beispiele für die nach dieser Variante des erfindungsgemäßen Verfahrens herzustellenden Ester sind beispielsweise Methanphosphonsäurephenylester-α-methylbenzylphenylester, Benzolphosphonsäurephenylester-α-methylbenzylphenylester, Methanphosphonsäurebis-(α-methylbenzylphenylester), Benzolphosphonsäurebis(α-methylbenzylphenylester), Methanphosphonigsäurephenylester-α-methylbenzylphenylester, Benzolphosphonigssurephenylester-α-methylbenzylphenylester, Methanphosphonigsäurebis(α-methylbenzylphenylester) und Benzolphosphonigsäurebis(α-methylbenzhylphenylester).

Das erfindungsgemäße Verfahren wird in einer allgemeinen Form wie folgt ausgeführt:
Das bei der Synthese der α-Methylbenzylphenyl-substituierten Phosphorarylester benötigte Phenol wird mit Styrol in einem molaren Verhältnis von 0,01 bis 300 Mol% Styrol, bezogen auf eingesetztes Phenol, vorzugsweise 10 bis 100 Mol% in Gegenwart von 0,01 bis 100 Mol%, bezogen auf eingesetztes Phenol, eines Phosphorchlorids bei Temperaturen von 20 - 350 °C in Kontakt gebracht.

Zu der entsprechend der gewünschten Zusammensetzung des Phosphorester-Endproduktes zusammengesetzten Mischung von Phenol und Styrol wird bei einer eine zügige Umsetzung ermöglichenden Temperatur, normalerweise einer erhöhten Temperatur, das Phosphorchlorid üblicherweise unter Rühren mit einer solchen Geschwindigkeit zugeführt, daß die gewünschte Reaktionstemperatur gehalten werden kann. Nach vollständigem Verbrauch des Styrols wird weiter das restliche, für die gewünschte Reaktion erforderliche Phosphorchlorid hinzugegeben. Sofern nicht schon eingangs geschehen, kann nunmehr ein die Veresterungsreaktion fördernder Katalysator, z.B. Magnesiumchlorid, Zinkchlorid, Aluminiumchlorid, Titantetrachlorid, sowie gegebenenfalls Phosphorpentachlorid hinzugefügt werden. Die Reaktionsmischung wird im Verlauf von wenigstens 0,5 Stunden auf die Endtemperatur, die zumeist oberhalb 250 °C liegt, erhitzt, um eine weitestgehende Umsetzung von Phosphorchlorid mit dem Phenol-Gemisch zu erreichen. Nachdem die Chlorwasserstoff-Freisetzung beendet ist, wird entsprechend den Materialeigenschaften und den Anforderungen an das Endprodukt, z.B. durch Abziehen flüchtiger Anteile im Vakuum sowie bei Produkten ohne Phoshor-Chlor-Bindungen durch Behandeln mit Wasser oder wäßrigen Lösungen, das Phosphorester-Gemisch gereinigt.

In einer bevorzugten Ausführungsform wird das erfindungsgemäße Verfahren in folgender Weise durchgeführt:

Das Phosphorchlorid und die entsprechend der gewünschten Produktzusammensetzung erforderlichen Mengen Phenol und Styrol werden kontinuierlich, gegebenenfalls unter Rühren, in eine mehrstufige Reaktionskaskade mit aufsteigender Temperaturführung eindosiert, wobei die gesamte Menge des Phosphorchlorids sowohl in den ersten Reaktor als auch in geteilter Menge in den ersten und einen der Folgereaktoren eindosiert werden kann. Der eine vollständige und zügige Veresterung des Phosphorchlorides mit den Phenolen begünstigende Veresterungskatalysator kann sowohl dem ersten Reaktor als auch einem der Folgereaktoren zugeführt werden. Nach erfolgter vollständiger Veresterung wird das ablaufende Rohprodukt entsprechend den durch die Anwendung vorgegebenen Anforderungen durch kombinierte Destillation und Wäsche gereinigt.

Die nach dem erfindungsgemäßen Verfahren hergestellten Produkte werden insbesondere als Hydraulikflüssigkeiten, Weichmacher und Flammschutzmittel eingesetzt.

Das erfindungsgemäße Verfahren soll anhand der folgenden Beispiele noch näher erläutert werden (Gew.-Angaben sind - soweit nicht anders vermerkt ist - Gew.-%).

Beispiele

Beispiel 1

In ein Reaktionsgemäß werden zu einer Mischung aus 1 Mol Phenol und 1 Mol Styrol in Gegenwart einer Spatelspitze Magnesiumchlorid bei 100 °C langsam unter Rühren 0,5 Mol Methanphosphonsäuredichlorid zugetropft. Nach Zugabe von wenigen Millilitern Methanphosphonsäuredichlorid startet die stark exotherme Reaktion, so daß die Heizung entfernt werden kann. Im Verlauf der 30-minütigen Zugabe der Restmenge Methanphosphonsäuredichlorid steigt die Temperatur kurzzeitig bis auf 195 °C an. Nach vollständiger Zugabe wird das Reaktionsgemisch noch 1 h bei 250 °C gerührt, bevor Leichtsiederanteile abdestilliert werden und das Rohprodukt nacheinander mit 0,1 n HCl, 0,1 n NaOH und Wasser gewaschen wird. Nach Trocknung bei 120 °C im Vakuum kann das viskose Produkt gaschromatographisch untersucht werden. Neben ca. 10 % unsubstituiertem Methanphosphonsäurediphenylester liegen 90 % mono-bzw. mehrfach-benzylierte Methanphosphonsäurearylester vor.

Beispiel 2

Zu einer vorgelegten Mischung aus 1 Mol Phenol, 1 Mol Styrol und einer Spatelspitze $MgCl_2$ wird bei 100 °C unter Rühren innerhalb von 40 min 1 Mol 1-Chlor-3-methyl-1-oxophospholen zugetropt. Nach Zugabe einiger Milliliter steigt die Temperatur schnell auf ca. 190 °C an, so daß die Heizung entfernt werden kann. Nach vollständiger Zugabe wird noch 1 h bei 220 °C bis 240 °C getempert. Das anfallende Rohprodukt besteht aus ca. 25 % unsubstituiertem Phenylester und ca. 75 % aus mono- bzw. mehrfach-benzylierten Arylestern.

Beispiel 3

1,2 Mol Phenol, 0,8 Mol Styrol und 0,4 Mol Phosphoroxychlorid werden bei Raumtemperatur gerührt. Nach Abklingen der bereits bei 20 °C esotherm startenden Reaktion wird eine Spatelspitze $MgCl_2$ zugegeben und langsam bis auf 340 °C erhitzt. Nach vollständig erfolgter Veresterung erhält man ein Phosphorsäureestergemisch aus ca. 10 % Triphenylphosphat und ca. 90 % mono- bzw. mehrfach benzylierter Arylphosphate.

Beispiel 4

1 Mol Phenol, 1 Mol Styrol und 0,44 Mol Phosphoroxychlorid werden in Gegenwart einer Spatelspitze $MgCl_2$ unter Rühren langsam erhitzt. Nach Abklingen der exothermen Reaktion wird das Reaktionsgemisch bis zum Ende der Chlorwasserstoff-Entwicklung bis 340 °C erhitzt. Das erhaltene zähflüssige Phosphorsäureestergemisch weist einen Anteil von ca. 5 % Triphenylphosphat und 95 % mono- bzw. mehrfach-benzylierten Arylphosphaten auf.

Beispiel 5

Zu einer Mischung aus 6 Mol Phenol und 0,05 Mol Phosphortrichlorid werden bei 100 °C langsam 6 Mol Styrol zugetropft. Die Zutropfgeschwindigkeit wird so geregelt, daß die Temperatur nicht über 130 °C steigt. Nach vollständiger Zugabe der Styrol-Menge werden bei 75 °C 1,95 Mol Phosphortrichlorid sowie eine Spatelspitze Magnesiumchlorid zugeführt. Anschließend wird das Reaktionsgemisch bis zur Beendigung der Chlorwasserstoff-Entwicklung auf 250 °C erhitzt. Das erhaltene Phosphorigsäureester-Gemisch weist einen Anteil von ca. 6-7 % Triphenylphosphit und 93-94 % mono- bzw. mehrfach-benzylierten Arylestern auf.

Beispiel 6

In eine vierstufige Reaktionskaskade werden kontinierlich 230 ml/h eines Gemisches aus 98,5 % $POCl_3$, 1,5 % $PCl_5$ und einer kat. Menge MgO und 1320 ml/h eines Gemisches aus 47,5 % Phenol und 52,5 % Styrol eindosiert. Die Temperatur wird über die einzelnen Verweilstufen bis zur Beendigung der Chlorwasserstoff-Entwicklung auf 300 °C gesteigert. Das nach einer destillativen Reinigung, sauren, alkalischen und neutralen Wäsche erhaltene Produkt weist eine Zusammensetzung von ca. 16 bis 17 % Triphenylphosphat und 83-84 % mono- bzw. mehrfach-benzylierter Arylphosphate auf.

## Patentansprüche

1. Verfahren zur Herstellung von Phosphorsäure-, Phosphorigsäure- und Phosphonsäurearylestern mit α-Methylbenzylphenoxyresten der allgemeinen Formel

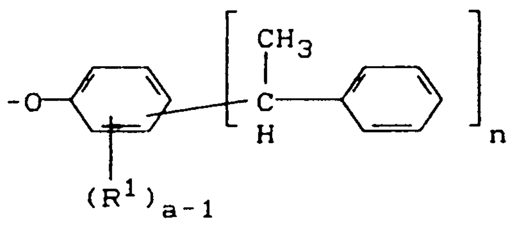

worin a und n unabhängig voneinander eine ganze Zahl von 1 bis 3, $R^1$ eine Alkylgruppe mit 1 bis 4 Kohlenstoff-Atomen bedeutet, dadurch gekennzeichnet, daß die Umsetzung von gegebenenfalls mit $C_1$ bis $C_4$-Alkylgruppen substituierten Phenolen oder eines Phenols mit Styrol durch Zusatz eines für die weitere Umsetzung vorgesehenen Phosphorchlorides als Katalysator erfolgt, und die weitere Umsetzung mit einem Phosphorchlorid gegebenenfalls in Gegenwart von Phosphorpentachlorid, gegebenenfalls unter Zugabe eines die Veresterungsreaktion fördernden Katalysators, gegebenenfalls unter Zusatz eines weiteren Phenols bei Temperaturen von 20-350 °C erfolgt.

2. Verfahren nach Anspruch 1, dadurch gekennzeichnet, daß als Phosphorchlorid Phosphoroxychlorid oder Phosphortrichlorid eingesetzt wird und Verbindundungen der allgemeinen Formel

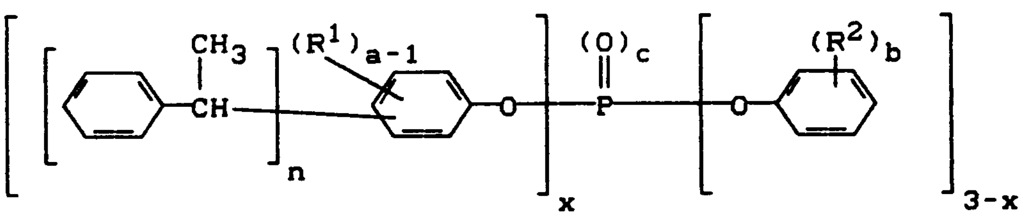

worin a, n und x unabhängig voneinander jeweils eine ganze Zahl von 1 bis 3, b eine ganze Zahl von 0 bis 3, c 0 oder 1 ist, $R^1$ und $R^2$ unabhängig voneinander eine Alkylgruppe mit 1 bis 4 C-Atomen bedeuten, hergestellt werden.

3. Verfahren nach Anspruch 1, dadurch gekennzeichnet, daß das Phosphorchlorid ein organisches Phosphorchlorid der Formel

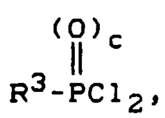

worin $R^3$ ein aliphatischer oder aromatischer Rest und c 0 oder 1 ist, eingesetzt wird, und Verbindungen der allgemeinen Formel

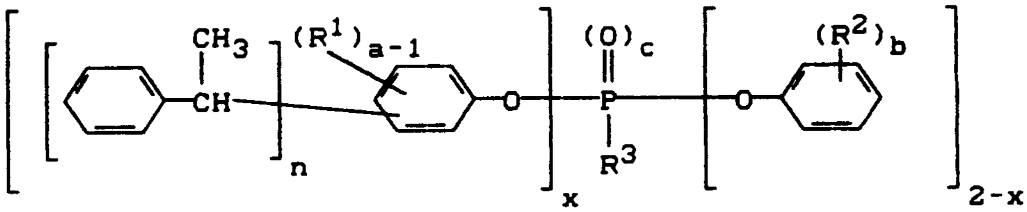

worin a und n unabhängig voneinander jeweils eine ganze Zahl von 1 bis 3, b eine ganze Zahl von 0 bis 3, x 1 oder 2 und c 0 oder 1 ist, $R^1$ und $R^2$ eine Alkylgruppe mit 1 bis 4 C-Atomen und $R^3$ einen aliphatischen oder aromatischen Rest bedeutet, hergestellt werden.

**4.** Verfahren nach einem der Ansprüche 1 bis 3, dadurch gekennzeichnet, daß das Phosphorchlorid in der für die weitere Umsetzung zum Arylester erforderlichen Menge zugegeben wird.

**5.** Verfahren nach einem der Ansprüche 1 bis 4, dadurch gekennzeichnet, daß das Phosphorchlorid, bezogen auf eingesetztes Phenol im Überschuß zugegeben wird.

**6.** Verfahren nach einem der Ansprüche 1 bis 5, dadurch gekennzeichnet, daß die Herstellung der Phosphorarylester aus Styrol, einem oder mehreren gegebenenfalls substituierten Phenolen und dem Phosphorchlorid in einer Eintopfreaktion stattfindet.

**7.** Verfahren nach einem der Ansprüche 1 bis 6, dadurch gekennzeichnet, daß die Umsetzungen in einem kontinuierlichen Prozeß ausgeführt werden.

**8.** Verfahren nach einem der Ansprüche 1 bis 7, dadurch gekennzeichnet, daß als Phenol nur das unsubstituierte Phenol eingesetzt wird.

**9.** Verfahren nach einem der Ansprüche 1 bis 8, dadurch gekennzeichnet, daß das für die Umsetzung zu α-Methylbenzyl-substituierten Phenolen bzw. Phenylestern benötigte Styrol in gegenüber den Phenolen unterstöchiometrischer Menge eingesetzt wird und Gemische von Phosphorestern hergestellt werden, die sowohl α-Methylbenzylphenoxy-Reste wie auch nicht mit α-Methylbenzyl-Resten substituierte Aryloxy-Reste enthalten.

**10.** Verfahren nach einem der Ansprüche 1 bis 9, dadurch gekennzeichnet, daß als für die Umsetzung zum Phosphorarylester benötigte Phosphorkomponente ein Gemisch verschiedener Phosphorchloride eingesetzt wird.

## Claims

**1.** A process for the production of phosphoric acid, phosphorous acid and phosphonic acid aryl esters containing α-methylbenzylphenoxy groups and corresponding to the following general formula:

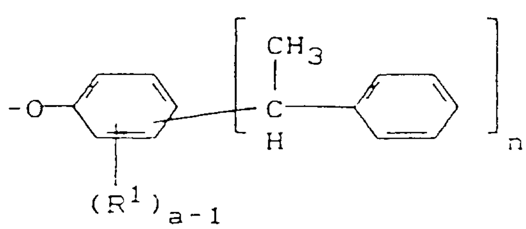

in which a and n independently of one another represent an integer of 1 to 3, $R^1$ is an alkyl group containing 1 to 4 carbon atoms,
characterized in that the reaction of optionally $C_{1-4}$ alkyl-substituted phenols or the reaction of a phenol with styrene is carried out by addition of a phosphorus chloride intended for the further reaction as

catalyst and the further reaction is carried out with a phosphorus chloride at temperatures of 20 to 350 °C optionally in the present of phosphorus pentachloride, optionally in the presence of a catalyst promoting the esterification reaction and optionally in the presence of another phenol.

**2.** A process as claimed in claim 1, characterized in that the phosphorus oxychloride or phosphorus trichloride is used as the phosphorus chloride and compounds corresponding to the following general formula:

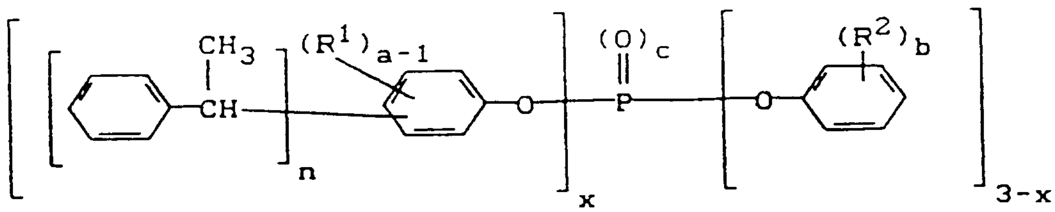

in which a, n and x independently of one another represent an integer of 1 to 3, b is an integer of 0 to 3, c is 0 or 1, $R^1$ and $R^2$ independently of one another represent an alkyl group containing 1 to 4 carbon atoms,
are produced.

**3.** A process as claimed in claim 1, characterized in that the phosphorus chloride is an organic phosphorus chloride corresponding to the following formula:

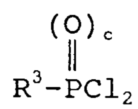

in which $R^3$ is an aliphatic or aromatic radical and c is 0 or 1,
and compounds corresponding to the following general formula:

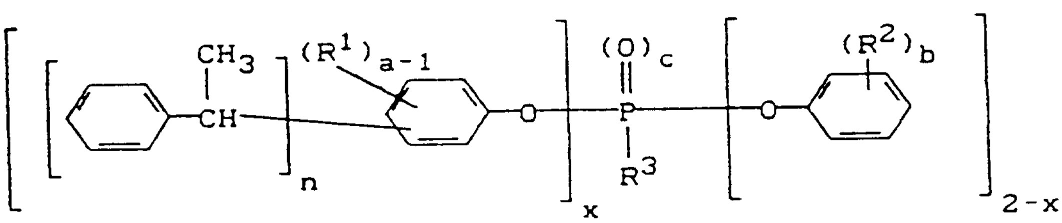

in which a and n independently of one another are an integer of 1 to 3, b is an integer of 0 to 3, x is 1 or 2 and c is 0 or 1, $R^1$ and $R^2$ represent an alkyl group containing 1 to 4 carbon atoms and $R^3$ is an aliphatic or aromatic radical,
are produced.

**4.** A process as claimed in any of claims 1 to 3, characterized in that the phosphorus chloride is added in the quantity required for the further reaction to the aryl ester.

**5.** A process as claimed in any of claims 1 to 4, characterized in that the phosphorus chloride is used in excess, based on the phenol used.

**6.** A process as claimed in any of claims 1 to 5, characterized in that the phosphorus aryl esters are produced from styrene, one or more optionally substituted phenols and the phosphorus chloride in a one-pot reaction.

7. A process as claimed in any of claims 1 to 6, characterized in that the reactions are carried out in a continuous process.

8. A process as claimed in any of claims 1 to 7, characterized in that only the unsubstituted phenol is used as the phenol.

9. A process as claimed in any of claims 1 to 8, characterized in that the styrene required for the reaction to $\alpha$-methylbenzyl-substituted phenols or phenyl esters is used in less than the stoichiometric quantity relative to the phenols and mixtures of phosphorus esters containing both $\alpha$-methylbenzylphenoxy radicals and aryloxy radicals which are not substituted by $\alpha$-methylbenzyl radicals are produced.

10. A process as claimed in any of claims 1 to 9, characterized in that a mixture of various phosphorus chlorides is used as the phosphorus component required for the reaction leading to the phosphorus aryl ester.

## Revendications

1. Procédé pour la préparation d'esters aryliques de l'acide phosphorique, de l'acide phosphoreux et d'acides phosphoniques contenant des groupes $\alpha$-méthylbenzylphénoxy et répondant à la formule générale

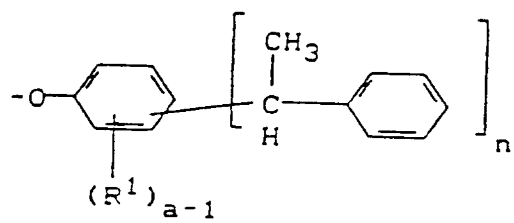

dans laquelle a et n représentent chacun, indépendamment l'un de l'autre, un nombre entier allant de 1 à 3, $R^1$ représente un groupe alkyle en $C_1$-$C_4$, caractérisé en ce que la réaction de phénols éventuellement substitués par des groupes alkyle en $C_1$-$C_4$ ou d'un phénol avec le styrène est réalisée avec adjonction d'un catalyseur consistant en un chlorure de phosphore prévu pour la réaction suivante, et la réaction suivante est réalisée avec un chlorure de phosphore, éventuellement en présence de pentachlorure de phosphore, éventuellement avec adjonction d'un catalyseur activant la réaction d'estérification, éventuellement avec adjonction d'un autre phénol, à des température de 20 à 350 °C.

2. Procédé selon la revendication 1, caractérisé en ce que l'on utilise en tant que chlorure de phosphore l'oxychlorure de phosphore ou le trichlorure de phosphore et on prépare des composés de formule générale

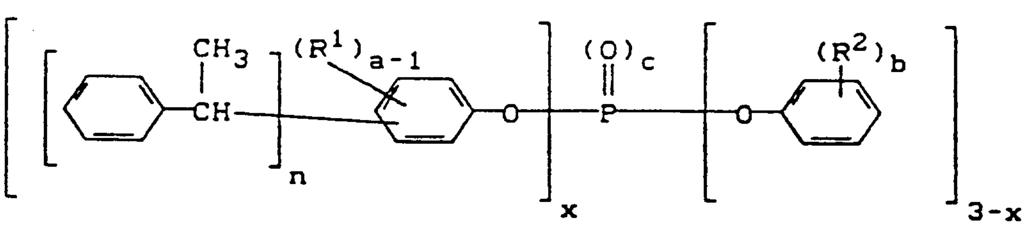

dans laquelle a, n et x représentent chacun, indépendamment les uns des autre, un nombre entier allant de 1 à 3, b est un nombre allant de 0 à 3, c est égal à 0 ou 1, $R^1$ et $R^2$ représentent chacun, indépendamment l'un de l'autre, un groupe alkyle en $C_1$-$C_4$.

3. Procédé selon la revendication 1, caractérisé en ce que le chlorure de phosphore mis en oeuvre est un chlorure de phosphore organique de formule.

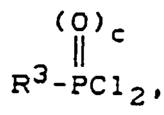

dans laquelle $R^3$ représente un radical aliphatique ou aromatique et c est égal à 0 ou 1, et l'on prépare des composés de formule générale

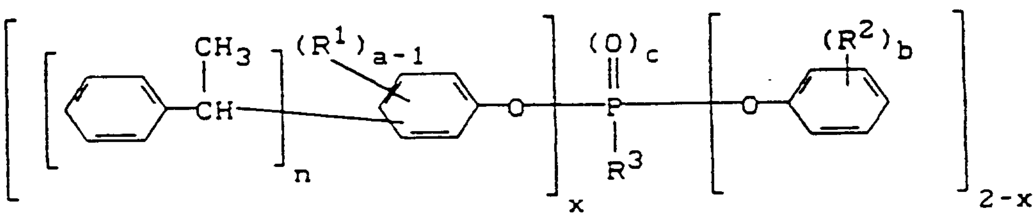

dans laquelle a et n représentent chacun, indépendamment l'un de l'autre, un nombre entier allant de 1 à 3, b est un nombre entier allant de 0 à 3, x est égal à 1 ou 2, et c à 0 ou 1, $R^1$ et $R^2$ représentent chacun un groupe alkyle en $C_1$-$C_4$ et $R^3$ représente un radical aliphatique ou aromatique.

4. Procédé selon une des revendications 1 à 3, caractérisé en ce que le chlorure de phosphore est ajouté à la quantité nécessaire pour la réaction suivante conduisant à l'ester arylique.

5. Procédé selon une des revendications 1 à 4, caractérisé en ce que le chlorure de phosphore est ajouté en excès par rapport au phénol mis en oeuvre.

6. Procédé selon une des revendications 1 à 5, caractérisé en ce que la préparation des esters aryliques du phosphore à partir du styrène, d'un ou plusieurs phénols éventuellement substitués et du chlorure de phosphore est réalisée sous forme d'une réaction en un seul récipient.

7. Procédé selon une des revendications 1 à 6, caractérisé en ce que les réactions sont exécutées dans une opération continue.

8. Procédé selon une des revendications 1 à 7, caractérisé en ce que l'on utilise en tant que phénol uniquement le phénol non substitué.

9. Procédé selon une des revendications 1 à 8, caractérisé en ce que le styrène nécessaire pour la réaction conduisant aux phénols ou esters phényliques à substituants $\alpha$-méthylbenzyle est mis en oeuvre en défaut par rapport aux phénols et en ce que l'on prépare des mélanges d'esters du phosphore contenant à la fois des groupes $\alpha$-méthylbenzylphénoxy et des groupes aryloxy non substitués par des groupes $\alpha$-méthylbenzyle.

10. Procédé selon une des revendications 1 à 9, caractérisé en ce que le composant phosphoré nécessaire pour la réaction conduisant à l'ester arylique phosphoré est un mélange de plusieurs chlorures de phosphore.